# FASCICULE DE BREVET EUROPEEN

(11) **EP 1 747 953 B1**
(45) Date de publication et mention de la délivrance du brevet: **07.05.2008**
(21) Numéro de dépôt: 06300825.4
(22) Date de dépôt: 21.07.2006
(51) Int. Cl.: B60R 22/02

(54) **Dispositif de prétension de la sangle d'une ceinture de sécurité, notamment pour véhicule automobile à trois portes**
Sicherheitsgurtanordnung mit Straffervorrichtung, insbesondere für Motorfahrzeug mit drei Türen
Saftey belt pretensioner device, especially for three-door motor vehicle

(30) Priorité: 25.07.2005 FR 0552295
(43) Date de publication de la demande: 31.01.2007
(73) Titulaire: Peugeot Citroen Automobiles SA, 78943 Vélizy-Villacoublay Cedex (FR)
(72) Inventeur: Sauvage, Sébastien, 25200 Montbeliard (FR)

(56) Documents cités:
- DE-A1- 3 420 397
- FR-A- 2 855 126
- FR-A- 2 862 033
- US-A- 4 667 980

## Description

La présente invention est relative à un dispositif permettant d'assurer la prétension d'une sangle de ceinture de sécurité destinée à équiper un véhicule automobile, notamment du type à trois portes, où les portes avant permettent non seulement d'accéder aux sièges situés à l'avant de l'habitacle mais également, après basculement du dossier de ces sièges s'accompagnant généralement d'un déplacement limité de ceux-ci vers l'avant, aux places situées à l'arrière, les passagers franchissant pour accéder à celles-ci l'espace laissé libre entre le siège avant ainsi avancé avec son dossier rabattu et le montant central ou « pied milieu » de l'habitacle.

Dans une configuration de véhicule de ce genre, on constate que la ceinture de sécurité associée à chaque siège avant, dont la sangle, après renvoi par un oeillet prévu à la partie supérieure du montant central, s'étend entre un point d'ancrage situé au voisinage de la base de ce montant et un enrouleur, usuellement caché sous la garniture interne de l'habitacle, également logé près du plancher de celui-ci, cette sangle se trouvant en position portée par l'usager en partie disposée en travers du passage d'accès aux places arrière précité.

Il est donc souhaitable, sinon nécessaire, de pouvoir déplacer momentanément le point d'ancrage inférieur de la sangle vers l'arrière de l'habitacle pour libérer ce passage, la sangle étant ensuite ramenée en position initiale une fois l'usager monté dans l'habitacle et occupant une place située à l'arrière de celui-ci.

On sait par ailleurs que, lors d'un choc subi par le véhicule, la ceinture qui équipe les sièges avant étant en position portée ou active, avec le brin de sa sangle s'étendant entre le point d'ancrage inférieur et l'oeillet de renvoi supérieur, muni d'une agrafe d'accrochage en prise avec une boucle de verrouillage situé du côté opposé du siège avant, de manière à entourer ainsi le bassin de l'usager et, au-delà de la boucle, le torse de celui-ci pour rejoindre l'oeillet, se détend légèrement avant d'être bloquée par l'enrouleur qui comporte dans ce but des moyens adaptés, déclenchés par l'effort brutal exercé sur la sangle par le passager lui-même, qui se déplace vers l'avant du véhicule en raison de sa propre inertie.

Or, pour une meilleure efficacité de la ceinture en cas de choc violent sur le véhicule, notamment pour assurer une meilleure retenue de l'usager, en assurant un rattrapage quasi immédiat du jeu pouvant exister entre la sangle et ce dernier assis sur son siège, il est également connu d'équiper la ceinture d'un mécanisme de prétension de la sangle qui en cas de choc, intervient sur celle-ci au voisinage de son point d'ancrage inférieur lorsque la ceinture est active c'est-à-dire portée par l'usager.

Un tel mécanisme est de préférence du type à déclenchement pyrotechnique, et est directement actionné par l'effet du choc, en particulier grâce à la détection de celui-ci par un capteur accélérométrique embarqué sur le véhicule.

Ce mécanisme, dont la structure et le fonctionnement sont bien connus dans la technique, comporte, à la manière d'un vérin, un élément mobile formant piston, logé dans un boîtier formant cylindre et déplacé sous l'effet de la mise à feu d'une charge explosive appropriée, contenue dans ce cylindre, les gaz produits par cette mise à feu propulsant violemment le piston de la position initiale qu'il occupe dans le cylindre à une position finale, distante de celui-ci.

Ce déplacement rapide du piston est mis à profit pour provoquer l'entraînement d'un câble ou analogue, dont une extrémité est fixée au piston ou élément mobile du mécanisme, ce câble traversant de façon étanche le fond du boîtier formant cylindre et étant réuni à l'autre extrémité à un organe de traction agissant sur la sangle pour rattraper le « mou » de celle-ci et la tendre convenablement, de telle sorte que le blocage réalisé par l'enrouleur consécutivement au choc, se produise dans les meilleures conditions, la ceinture immobilisant parfaitement et instantanément le passager assis sur son siège, en évitant qu'il ne soit projeté vers l'avant, notamment contre le pare-brise, le volant ou la planche de bord selon le cas, avec risque de lésion du bassin et/ou des genoux.

Le brevet français 03 013046 du 6 novembre 2003 au nom de la Demanderesse, décrit un dispositif selon le préambule de la revendication 1, réalisant une prétension de la sangle de la ceinture en cas de choc sur un véhicule, notamment du type à trois portes, où cette ceinture est adaptée pour passer d'une configuration portée dans laquelle elle entoure au moins en partie le passager assis sur son siège à une configuration rangée dans laquelle elle est dégagée de ce passager, cette ceinture étant ancrée par rapport au châssis du véhicule en différentes zones distinctes incluant une zone d'ancrage inférieure et extérieure par rapport au siège, par exemple au niveau d'un longeron latéral de l'habitacle, cette zone étant équipée d'une rampe d'ancrage d'une partie correspondante de la ceinture et le long de laquelle cette partie est déplaçable suivant la direction longitudinale du véhicule, cette zone d'ancrage inférieure et extérieure étant en outre équipée d'un mécanisme de prétension de la partie de ceinture ancrée en position active, adapté pour, lors d'un choc, tendre cette partie de ceinture si celle-ci est dans sa configuration portée.

Dans ce brevet antérieur, on prévoit spécifiquement que le mécanisme de prétension comporte un actionneur pyrotechnique.

Selon cette réalisation connue par ce brevet, la rampe d'ancrage comporte deux bras parallèles l'un à l'autre, s'étendant sensiblement selon la direction longitudinale du véhicule, ces deux bras étant décalés l'un par rapport à l'autre suivant une direction transversale.

La sangle de la ceinture forme à une extrémité réunie à un des bras de la rampe d'ancrage un ourlet qui peut glisser selon la longueur de ce bras pour se déplacer vers l'arrière de l'habitacle afin de libérer le passage d'accès aux places arrière et passe dans son retour vers l'oeillet de renvoi en partie supérieure du montant central sous l'autre bras de la rampe, en formant un pli ou une poche entre ces deux bras.

Un doigt en L comporte une première partie en forme de tige horizontale qui s'engage dans le pli de la sangle et une deuxième partie en forme de tige verticale qui est réunie à l'extrémité du câble de traction dont l'autre extrémité est reliée au piston ou partie mobile du mécanisme pyrotechnique, de telle sorte que le déclenchement de celui-ci, dans les conditions rappelées plus haut, tire le doigt vers le bas et abaisse le pli de la sangle en direction du plancher de l'habitacle, provoquant sur la ceinture la prétension recherchée.

Dans une telle réalisation, le boîtier du mécanisme pyrotechnique est solidarisé du plancher de l'habitacle du véhicule, le doigt qui réalise la prétension de la ceinture sous la commande de ce mécanisme ne pouvant être mis en oeuvre que dans la position portée de la ceinture, correspondant à celle où la sangle est en travers du passage d'accès, à l'extrémité de la rampe d'ancrage dirigée vers l'avant du véhicule.

Le dispositif conforme à ce brevet antérieur, se révèle relativement complexe à fabriquer et surtout à monter dans l'habitacle, à la partie basse du montant central. De plus, l'entraînement de la sangle vers le bas par le doigt en L pour créer la prétension nécessaire en cas de choc sur le véhicule, n'est pas toujours maîtrisé, notamment si la partie de la sangle qui comporte le pli à l'intérieur duquel se dispose le doigt n'est pas située complètement à l'extrémité de la rampe dirigée vers l'avant du véhicule, ce doigt ne comportant aucune faculté de déplacement transversal avec la sangle elle-même.

La présente invention vise donc un dispositif du type déjà concerné par le brevet précité, mais qui comporte divers perfectionnements améliorant la simplicité des moyens mis en oeuvre et leur fiabilité en même temps que la commodité de leur montage dans l'habitacle, le guidage de la sangle en déplacement sur la rampe assurant simultanément celui de sa liaison avec le mécanisme pyrotechnique de sorte que la prétension créée par le déclenchement de ce mécanisme puisse se produire, quelle que soit la position de la sangle sur la rampe.

A cet effet, le dispositif considéré, comportant pour chacun des sièges avant d'un véhicule du type à trois portes, une ceinture et une rampe d'ancrage horizontale de celle-ci, fixée à la partie inférieure de l'habitacle de ce véhicule, sensiblement au droit du montant central de celui-ci, la sangle de la ceinture formant à une de ses extrémités un ourlet engagé sur la rampe et pouvant glisser selon la longueur de celle-ci, soit vers l'arrière de l'habitacle pour dégager un passage d'accès aux places situées derrière le siège avant, soit vers l'avant pour être placée dans une position où la ceinture est portée par l'usager assis sur ce siège avant, cette rampe étant associée à un mécanisme pyrotechnique apte à être déclenché en cas de choc brutal sur le véhicule, ce mécanisme comportant un élément mobile tirant sur l'extrémité de la sangle glissant sur la rampe par l'intermédiaire d'un organe de traction réuni à un câble entraîné par cet élément mobile afin de créer une prétension de la ceinture, se caractérise en ce que l'organe de traction agissant sur la sangle est constitué par un crochet, solidaire de l'extrémité du câble opposée à celle reliée à l'élément mobile du mécanisme pyrotechnique, ce crochet comportant un anneau de guidage traversé par la rampe et étant en prise avec l'extrémité de la sangle comportant l'ourlet glissant sur cette rampe.

Selon une autre caractéristique, la rampe d'ancrage est solidarisée de l'habitacle par deux vis coopérant avec ses extrémités, notamment à travers des boutonnières de fixation, ménagées dans cette rampe.

Selon une caractéristique complémentaire, le câble s'enroule entre l'élément mobile du mécanisme et le crochet de l'organe de traction sur une poulie de renvoi, montée libre sur une extrémité de la rampe.

Avantageusement, le mécanisme pyrotechnique comporte un boîtier fixe solidaire de la rampe et contenant l'élément mobile fixé à l'extrémité du câble.

Dans un mode de réalisation préféré, le boîtier du mécanisme pyrotechnique contient une charge explosive reliée à un connecteur électrique réuni à un détecteur extérieur, sensible à l'effet du choc et propre à commander la mise à feu de cette charge et le déplacement de l'élément mobile.

D'autres caractéristiques d'un dispositif de prétension de la sangle d'une ceinture de sécurité établi conformément à l'invention, apparaîtront encore à travers la description qui suit d'un exemple de réalisation, donné à titre indicatif et non limitatif, en référence aux dessins annexés sur lesquels :
- La Figure 1 est une vue schématique partielle, en coupe longitudinale, de l'habitacle d'un véhicule automobile du type à trois portes, représenté avec les sièges avant retirés de manière à permettre de voir la position occupée par la ceinture de sécurité associée à un de ces sièges, lorsque l'accès aux places arrière est dégagée.
- La Figure 2 illustre, vu de côté, un des sièges avant de l'habitacle du véhicule selon la Figure 1, avec la ceinture de sécurité portée par l'usager assis sur ce siège.
- La Figure 3 est analogue à la Figure 2, mais schématise dans ce cas la position de l'usager en cas de choc violent sur le véhicule, afin de montrer l'effet de maintien assuré par la ceinture.
- Les Figures 4 et 5 sont des vues à plus grande échelle qui illustrent le dispositif de prétension de la ceinture conforme à l'invention, dans deux positions respectivement avant et après déclenchement du mécanisme pyrotechnique, consécutivement au choc violent sur le véhicule.

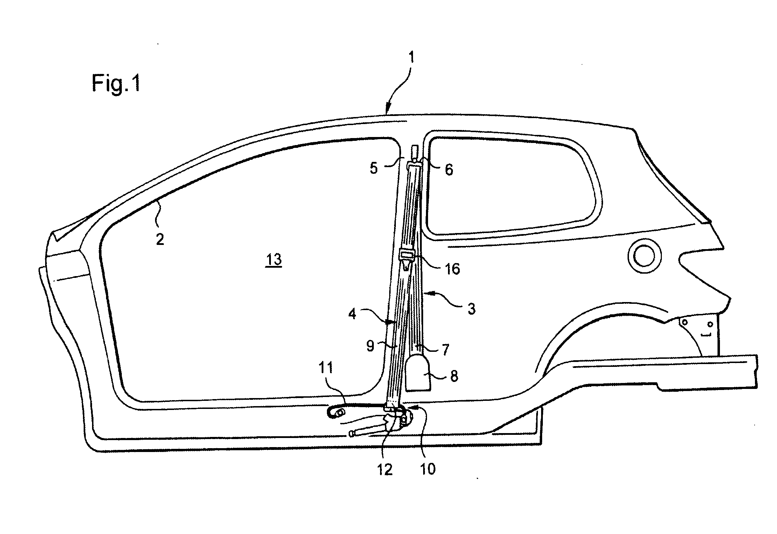

Sur la Figure 1, la référence 1 désigne de façon générale l'habitacle d'un véhicule automobile du type à trois portes, c'est-à-dire comportant deux portes d'accès à l'intérieur de cet habitacle, situées sensiblement au niveau des sièges avant du véhicule, la troisième porte réalisant, à l'arrière, la fermeture du coffre.

Sur cette figure, qui illustre seulement un des côtés de l'habitacle, la référence 2 désigne l'ouverture de la porte avant correspondante, vue de l'intérieur du véhicule, le siège avant disposé au droit de cette ouverture n'étant pas représenté.

La référence 3 désigne la ceinture de sécurité associée à ce siège avant, cette ceinture comportant de façon classique, une sangle souple 4 qui traverse, à la partie supérieure du montant central 5 ou « pied milieu » de l'habitacle, un oeillet de renvoi 6, dont la position, éventuellement réglée en hauteur pour la meilleure commodité de l'usager, n'est plus ensuite modifiée.

La sangle 4 comporte, au-delà de l'oeillet 6, un brin 7 réuni à un enrouleur 8, d'un type en lui-même bien connu dans la technique, cet enrouleur étant logé en un endroit approprié à la partie inférieure du montant central 5, le cas échéant sous la garniture qui habille l'intérieur de l'habitacle 1.

La structure de cet enrouleur et ses modalités de fonctionnement sont classiques et n'importent pas par elles-mêmes à l'invention, de sorte qu'il est inutile de les décrire ici.

L'autre brin 9 de la sangle 4, au-delà de l'oeillet de renvoi 6, est réuni à un dispositif d'ancrage 10, dont le détail de la réalisation sera explicité ci-après, ce dispositif étant prévu à la partie basse du montant central 5 et constituant un élément de fixation pour l'extrémité correspondante de la ceinture 3.

De façon également connue, notamment par le brevet antérieur de la Demanderesse déjà cité, le dispositif d'ancrage 10 est aménagé de manière à comporter une rampe de guidage 11 qui s'étend sensiblement dans la direction longitudinale de l'habitacle et qui est solidarisée de celui-ci au voisinage de la base du montant central 5.

Notamment, le brin 9 de la sangle 4 comporte, à son extrémité inférieure qui coopère avec la rampe 11, un ourlet 12, permettant de déplacer le point d'ancrage de cette sangle selon la longueur de la rampe, en le faisant glisser vers l'avant ou vers l'arrière.

La position de la sangle 4 tout à l'avant de la rampe 11 correspond à celle où la ceinture est convenablement portée par l'usager assis sur son siège, tandis que la position à l'arrière de la rampe, telle qu'elle est illustrée sur la Figure 1, permet, lorsque la ceinture n'est pas utilisée, de dégager au mieux le passage 13 laissé libre entre le montant central 5 et le dossier du siège avant, afin de permettre aux passagers du véhicule de pénétrer dans l'habitacle lorsqu'ils envisagent d'occuper les sièges prévus à l'arrière de celui-ci.

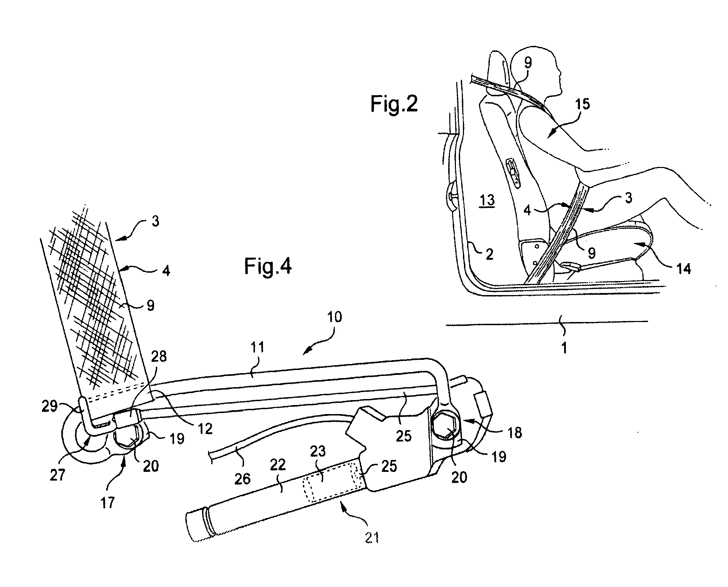

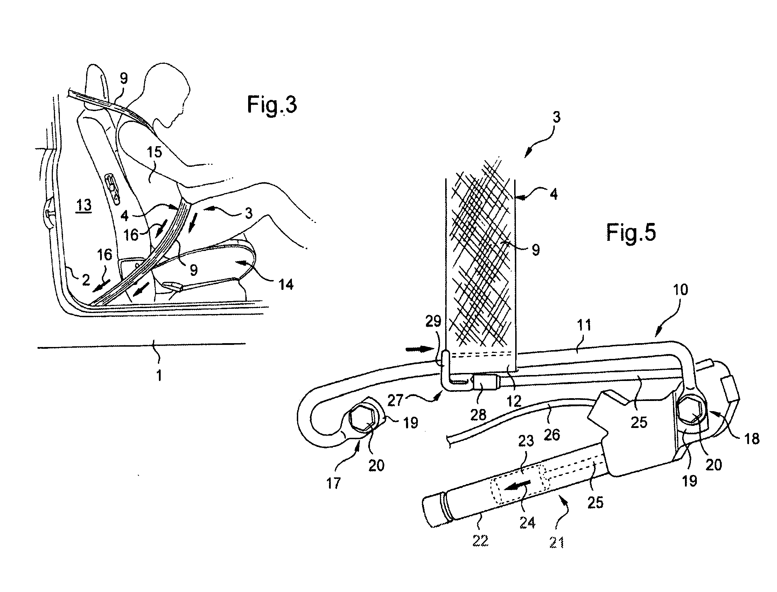

Les Figures 2 et 3 illustrent d'autres dispositions en elles-mêmes classiques pour la mise en oeuvre de la ceinture de sécurité.

Sur ces figures, on a schématiquement représenté le siège avant 14 du véhicule, disposé au droit de l'ouverture 2, avec l'usager 15 assis sur ce siège.

Le brin 9 de la sangle 4 qui est réuni au dispositif d'ancrage (non apparent sur ces figures) à son extrémité inférieure comme précisé ci-dessus, entoure le bassin de l'usager 15, la ceinture comportant de façon usuelle une agrafe d'accrochage 16 (Figure 1), propre à venir en prise avec une boucle de verrouillage (également non représentée), située de l'autre côté du siège 14, avant de revenir vers l'oeillet de renvoi 6 après avoir entouré, au-delà de cette boucle, le torse de l'usager.

La Figure 3 illustre l'effet d'un choc brutal reçu par le véhicule sur l'usager 15, qui, du fait de son inertie propre, a tendance à être projeté vers l'avant dans l'habitacle, la ceinture 3, consécutivement au blocage de l'enrouleur 8, empêchant qu'il ne heurte violemment, selon le cas, le volant, le pare-brise ou la planche de bord situés devant lui.

Néanmoins, le confort indispensable dû à l'usager exige qu'en fonctionnement normal, la sangle 4 de la ceinture 3 ne l'emprisonne pas de façon trop serrée, en laissant au contraire un certain jeu ou « mou », qui peut en revanche être préjudiciable lors de ce choc, surtout si le passager est très proche des parties de l'habitacle qu'il peut heurter violemment.

Il est donc souhaitable, lorsque se produit ce choc, d'exercer sur le brin 9 de la sangle 4 qui se raccorde au dispositif d'ancrage 10 à la partie inférieure de l'habitacle 1, un effet immédiat de prétension, assurant un effort de traction sur la sangle, schématisé sur la Figure 3 par les flèches 16 et qui absorbe instantanément le jeu précité, en assurant une immobilisation efficace et sûre de l'usager.

Les Figures 4 et 5 illustrent le dispositif d'ancrage conforme à l'invention.

L'extrémité du brin 9 de la sangle 4 comportant l'ourlet 12 qui peut glisser sur la rampe longitudinale 11 montée à la partie inférieure de l'habitacle, est représentée, sur la Figure 4 dans la position où la ceinture est normalement portée par l'usager, avant le choc, et sur la Figure 5, dans celle où l'effort de traction réalisant la prétension de la ceinture a été effectué.

Sur ces figures, la rampe d'ancrage 11, qui s'étend sensiblement longitudinalement dans l'habitacle, est recourbée à ses extrémités pour comporter des boutonnières de fixation, respectivement 17 et 18, chacune étant par exemple constituée d'une patte 19 convenablement percée pour le passage d'une vis 20.

La boutonnière 10 est également mise en oeuvre pour assurer l'immobilisation avec la rampe 11 d'un mécanisme pyrotechnique 21, dont la structure est également connue dans la technique, ce mécanisme comportant un boîtier 22 formant cylindre dans lequel est logé un élément mobile 23 formant piston, le déplacement de ce dernier dans le cylindre étant assuré consécutivement au déclenchement d'une charge explosive produisant brutalement sur ce piston un effort dû aux gaz de combustion de cette charge, assurant son déplacement d'une position initiale figurée en traits pointillés sur la Figure 4 à une position finale représentée sur la Figure 5, le déplacement du piston de l'une à l'autre étant schématisé sur cette dernière figure par la flèche 24.

L'élément mobile 23 du mécanisme pyrotechnique 21 est par ailleurs solidarisé de l'extrémité d'un câble de traction 25, qui traverse de façon étanche le fond du boîtier 22, puis est renvoyé par une poulie ou analogue, pour s'étendre parallèlement à la rampe 11 du dispositif d'ancrage.

Sur les Figures 4 et 5, on a désigné sous la référence 26 un conducteur électrique, réuni à un capteur accélérométrique (non représenté), embarqué sur le véhicule et qui, sensible au choc reçu, produit une étincelle de déclenchement de la charge explosive et la commande de déplacement de l'élément mobile avec déplacement consécutif du câble de traction.

Conformément à l'invention, l'extrémité du câble de traction 25, opposée à celle qui est réunie à l'élément mobile 23, est munie d'un crochet de traction 27, comportant une attache 28 terminée par un anneau 29 traversé par la rampe d'ancrage 11, ce crochet étant également en prise avec l'ourlet 12 prévu en bout du brin 9 de la sangle 4 qui peut glisser sur cette rampe.

On comprend dès lors immédiatement que, la ceinture 3 étant initialement disposée sur la rampe d'ancrage 11 à l'extrémité gauche de celle-ci sur les dessins, soit donc vers l'avant de l'habitacle, correspondant à sa position normale d'utilisation autour du bassin et du torse de l'usager, l'intervention d'un choc violent, en tous cas suffisamment important pour provoquer le déclenchement du mécanisme pyrotechnique 21, se traduit par un effort de traction simultané sur le câble 25 qui, par l'intermédiaire du crochet 27, entraîne la sangle 4 vers l'arrière sur la rampe 11, en assurant ainsi le rattrapage immédiat du jeu existant et l'immobilisation ferme et sûre de l'usager.

On réalise ainsi un dispositif de conception très simple dont le montage peut être aisément effectué en usine lors de la mise en place de chaque ceinture de sécurité du véhicule, la conception de ce dispositif permettant de combiner le déplacement de la sangle assurant le rattrapage du jeu de la ceinture avec le guidage de l'élément actif du mécanisme pyrotechnique qui exerce sur la sangle l'effort de traction exactement maîtrisé, créant la prétension nécessaire.

## Revendications

1. - Dispositif de prétension de la ceinture (3) associée à chacun des sièges avant (14) d'un véhicule du type à trois portes, comportant une rampe d'ancrage horizontale (11), fixée à la partie inférieure de l'habitacle (1) de ce véhicule, sensiblement au droit du montant central (5) de celui-ci, la sangle (4) de la ceinture formant à une de ses extrémités un ourlet (12) engagé sur la rampe et pouvant glisser selon la longueur de celle-ci, soit vers l'arrière de l'habitacle pour dégager un passage d'accès (13) aux places situées derrière le siège avant, soit vers l'avant pour être placée dans une position où la ceinture est portée par l'usager (15) assis sur ce siège avant, cette rampe (11) étant associée à un mécanisme pyrotechnique (21) apte à être déclenché en cas de choc brutal sur le véhicule, ce mécanisme comportant un élément mobile (23) tirant sur l'extrémité de la sangle (4) glissant sur la rampe (11) par l'intermédiaire d'un organe de traction réuni à un câble (25) entraîné par cet élément mobile afin de créer une prétension de la ceinture, **caractérisé en ce que** l'organe de traction agissant sur la sangle est constitué par un crochet (27), solidaire de l'extrémité du câble (25) opposée à celle reliée à l'élément mobile (23) du mécanisme pyrotechnique (21), ce crochet comportant un anneau de guidage (29) traversé par la rampe (11) et étant en prise avec l'extrémité de la sangle (4) comportant l'ourlet (12) glissant sur cette rampe.

2. - Dispositif selon la revendication 1, **caractérisé en ce que** la rampe d'ancrage (11) est solidarisée de l'habitacle par deux vis (20) coopérant avec ses extrémités, notamment à travers des boutonnières de fixation (17,18), ménagées dans cette rampe.

3. - Dispositif selon la revendication 1, **caractérisé en ce que** le câble (25) s'enroule entre l'élément mobile (23) du mécanisme pyrotechnique (21) et le crochet (27) de l'organe de traction sur une poulie de renvoi, montée libre sur une extrémité de la rampe (11).

4. - Dispositif selon la revendication 1, **caractérisé en ce que** le mécanisme pyrotechnique (21) comporte un boîtier fixe (22) solidaire de la rampe (11) et contenant l'élément mobile (23) fixé à l'extrémité du câble (25).

5. - Dispositif selon la revendication 1, **caractérisé en ce que** le boîtier (22) du mécanisme pyrotechnique (21) contient une charge explosive reliée à un connecteur électrique réuni à un détecteur extérieur, sensible à l'effet du choc et propre à commander la mise à feu de cette charge et le déplacement de l'élément mobile (23).

## Claims

1. Device for pretensioning the belt (3) associated with each of the front seats (14) of a vehicle of the three-door type, comprising a horizontal anchoring rail (11) fixed to the lower part of the passenger compartment (1) of this vehicle substantially in line with the central pillar (5) thereof, the strap (4) of the belt forming, at one of its ends, a hem (12) engaged over the rail and capable of sliding along the length thereof, either towards the rear of the passenger compartment in order to make space (13) for accessing the spaces situated behind the front seat, or towards the front in order to be placed in a position in which the belt is worn by the user (15) sitting on this front seat, this rail (11) being associated with a pyrotechnic mechanism (21) that can be initiated in the event of the vehicle experiencing a heavy impact, this mechanism comprising a moving element (23) pulling on the end of the strap (4) sliding along the rail (11) by means of a pulling member connected to cable (25) driven by this moving element in order to pretension the belt, **characterized in that** the pulling member acting on the belt consists of a hook (27) secured to the opposite end of the cable (25) to the end that is connected to the moving element (23) of the pyrotechnic mechanism (21), this hook comprising a guide ring (29) through which the rail (11) passes and being engaged with that end of the strap (4) that comprises the hem (12) sliding along this rail.

2. Device according to Claim 1, **characterized in that** the anchoring rail (11) is secured to the passenger compartment by two screws (20) collaborating with its ends, particularly through attachment eyelets (17, 18) formed in this rail.

3. Device according to Claim 1, **characterized in that** the cable (25) is wound, between the moving element (23) of the pyrotechnic mechanism (21) and the hook (27) of the pulling member, onto a return pulley mounted freely on one end of the rail (11).

4. Device according to Claim 1, **characterized in that** the pyrotechnic mechanism (21) comprises a fixed unit (22) secured to the rail (11) and containing the moving element (23) fixed to the end of the cable (25).

5. Device according to Claim 1, **characterized in that** the unit (22) of the pyrotechnic mechanism (21) contains an explosive charge connected to an electrical connector itself connected to an external detector sensitive to the effect of the impact and capable of initiating the firing of this charge and the moving of the moving element (23).

## Patentansprüche

1. Vorrichtung zur Vorspannung des jedem der Vordersitze (14) eines Fahrzeugs vom Typ mit drei Türen zugeordneten Gurts (3), mit einer waagrechten Verankerungsrampe (11), die im unteren Bereich der Fahrgastzelle (1) dieses Fahrzeugs im Wesentlichen im rechten Winkel zu dessen Mittelsäule (5) befestigt ist, wobei der Spanngurt (4) des Gurts an einem seiner Enden einen Saum (12) bildet, der auf die Rampe aufgeschoben ist und entlang deren Länge gleiten kann, entweder zur Rückseite der Fahrgastzelle, um einen Zugang (13) zu den Sitzen hinter dem Vordersitz freizugeben, oder nach vorne, um in einer Stellung angeordnet zu werden, in der der Gurt von dem auf diesem Vordersitz sitzenden Benutzer (15) getragen wird, wobei diese Rampe (11) einem pyrotechnischen Mechanismus (21) zugeordnet ist, der im Fall eines starken Aufpralls auf das Fahrzeug ausgelöst werden kann, wobei dieser Mechanismus ein bewegliches Element (23) aufweist, das am auf der Rampe (11) gleitenden Ende des Spanngurts (4) mittels eines Zugorgans zieht, das mit einem Kabel (25) vereint ist, das von diesem beweglichen Organ angetrieben wird, um eine Vorspannung des Gurts zu erzeugen, **dadurch gekennzeichnet, dass** das auf den Spanngurt wirkende Zugorgan aus einem Haken (27) besteht, der fest mit dem Ende des Kabels (25) entgegengesetzt zu demjenigen verbunden ist, das mit dem beweglichen Element (23) des pyrotechnischen Mechanismus (21) verbunden ist, wobei dieser Haken einen Führungsring (29) aufweist, der von der Rampe (11) durchquert wird und mit dem Ende des Spanngurts (4) in Eingriff ist, das den auf dieser Rampe gleitenden Saum (12) aufweist.

2. Vorrichtung nach Anspruch 1, **dadurch gekennzeichnet, dass** die Verankerungsrampe (11) mit der Fahrgastzelle durch zwei Schrauben (20) fest verbunden ist, die mit ihren Enden insbesondere durch Befestigungsaussparungen (17, 18) hindurch zusammenwirken, die in dieser Rampe ausgebildet sind.

3. Vorrichtung nach Anspruch 1, **dadurch gekennzeichnet, dass** das Kabel (25) sich zwischen dem beweglichen Element (23) des pyrotechnischen Mechanismus (21) und dem Haken (27) des Zugorgans auf eine Umlenkrolle aufwickelt, die frei auf ein Ende der Rampe (11) montiert ist.

4. Vorrichtung nach Anspruch 1, **dadurch gekennzeichnet, dass** der pyrotechnische Mechanismus (21) ein festes Gehäuse (22) aufweist, das fest mit der Rampe (11) verbunden ist und das bewegliche Element (23) enthält, das am Ende des Kabels (25) befestigt ist.

5. Vorrichtung nach Anspruch 1, **dadurch gekennzeichnet, dass** das Gehäuse (22) des pyrotechnischen Mechanismus (21) eine Sprengladung enthält, die mit einem elektrischen Verbinder verbunden ist, der mit einem externen Detektor vereinigt ist, der für die Stoßwirkung empfindlich ist und das Zünden dieser Ladung und die Verschiebung des beweglichen Elements (23) steuern kann.
